# EUROPEAN PATENT APPLICATION

(11) **EP 3 598 308 A1**
(43) Date of publication of application: **22.01.2020**
(21) Application number: 18183886.3
(22) Date of filing: 17.07.2018
(51) Int. Cl.: G06F 11/36

(54) **AUTOMATED SUPERVISED TESTING SYSTEM AND USE THEREOF**

(71) Applicant: Emm! solutions GmbH, 71263 Weil der Stadt (DE)
(72) Inventor: Müller, Armin, 71263 Weil der Stadt (DE)
(74) Representative: Meyer zu Bexten, Elmar

(57) **Abstract**

**Problem**

A common vision for future mobility provides for emission-free and accident-free automated transportation. For this vision to materialize, a comprehensive coverage of hazard sources, matching system design, and safeguarding of the implementation (testing) are central prerequisites to a fault-free, secure functionality.

**Solution**

This problem is solved by an automated supervised testing system (1-5), combining smart analytics with highly automated testing, simultaneous observation of results on multiple levels, a parallel online search based on so-called crawlers, and an adaptation to commercially available IT systems. A core element of the invention is a test monitor (4).

## Description

### Technical Field

The invention relates to the product and process as per the first portion of the independent claims.

### Background Art

In the context of new transportation concepts, vehicles are controlled according to demand, infrastructure, and traffic at hand. A state-of-the-art vehicle may consist of a platform (rolling chassis), drive-by-wire system, control unit (consolidating environmental information and managing the actual trip), and body comprising interior and exterior work designed for a given transport task. An exemplary impact assessment is presented in MAKRIDIS, Michail, et al. Assessing the Impact of Connected and Automated Vehicles. A Freeway Scenario. Advanced Microsystems for Automotive Applications 2017. Lecture Notes in Mobility. 2018, p.213-225.

Development of the control unit and its integration are highly safety-critical. By way of example, US 7844396 B (DEERE AND CO) 15.03.2007 discloses a modular, extensible software system for use with multi-modal, autonomous, or semi-autonomous vehicles involving the coherent integration of modules with responsibilities for human-interaction, training, path planning, mission execution, navigation, and safety to develop and complete missions. That system expresses vehicle behaviors through numerous small-grain elements to complete a mission and may be adapted or modified by adding new software modules or modifying existing modules as missions change or expand.

The known prior art further comprises highly automated testing coordinated by an IT system. Furthermore, the state of the art encompasses applications for evaluation with various objectives based on smart analytics.

### Summary of invention

The invention as claimed is hereinafter disclosed in such a way that the technical problem with which it deals can be appreciated and the solution can be understood.

### Technical Problem

A common vision for future mobility pertains to emission-free and accident-free automated transportation. For this vision to materialize, a comprehensive coverage of hazard sources, matching system design, and safeguarding of the implementation (testing) are central prerequisites to a fault-free, secure functionality.

As legally required in the automotive sector, especially the complex control unit must be functionally safe as defined by the ISO 26262 standard. Such safety is achieved through numerous test cases, test and simulation runs, and comparison of their results. Those tasks are highly time-consuming and their coverage often incomplete given the wide variety of scenarios to be considered.

Ultimate functional safety requires the utmost test coverage achievable through the systems available. It also demands for a highly automated test process that takes into consideration all levels of the envisaged functionality.

### Solution to Problem

This problem is solved by an automated supervised testing system, combining smart analytics with highly automated testing, simultaneous observation of results on multiple levels, a parallel online search based on so-called crawlers, and an adaptation to commercially available IT systems. A core element of the invention is a test monitor.

### Advantageous effect of invention

Automated supervised testing contributes to the functional safety of the system under test and thus ultimately helps avoid personal and property damage.

In addition, automated supervised testing reduces cost as it may be performed extremely fast, with minimal manpower, or even unattended. This way, in a typical engineering setup, the outcome of an overnight test may help uncover and correct a misguided course of development before the next business day.

Likewise, automated evaluation of results, transparency, and completeness are ensured, thus enhancing both quality and coverage. In summary, the development process is greatly accelerated.

Automated supervised testing will also be applicable to small and medium businesses at reasonably low cost because except for the test monitor, standard off-the-shelf systems may be employed.

By modularizing the system, processing may take place in distributed locations. The resulting data converges in a central IT system.

This procedure creates a very large amount of data. Provided a sufficient level of data quality, functional safety of the resulting vehicle can be significantly improved.

### Brief description of drawings

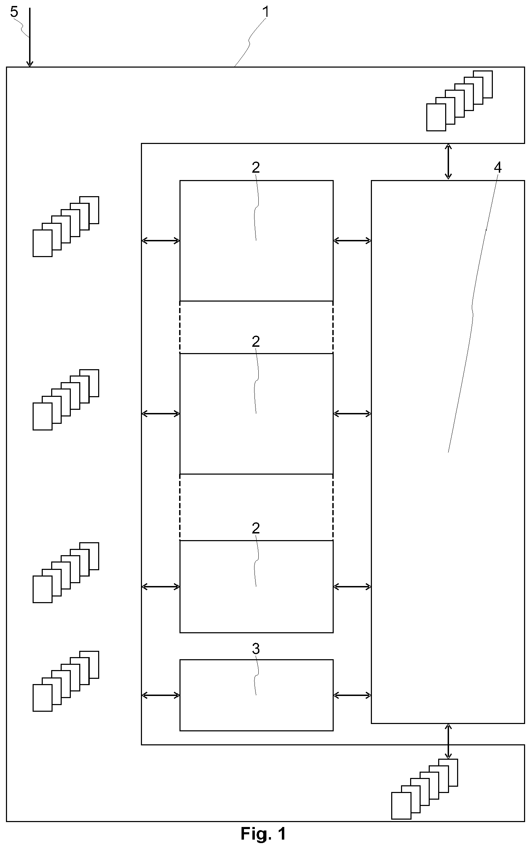

Figure 1 is a block diagram of an automated supervised testing system.

### Description of embodiments

The automated supervised testing system (1-4) depicted in Figure 1 comprises four components whose interaction will be laid out below.

An IT system frame (1) is used to manage the overall process, document the results, and provide the database used for analyzing the pertinent data.

A test object (2) consists of the test cases, the system - such as a simulation, vehicle, or test bench - for generating their outcome, and the creation of the test results. For test comparison (3), rules are created for each test case, with which the corresponding test result is evaluated. These rules are assigned to the test case as related items.

A central test monitor (4) is both rule-based and data-based. It serves to detect patterns simultaneously on different levels of the signals, algorithms, system, and system environment, to determine correlations and to provide an evaluation of the test. Depending on the training of the data-based algorithms, the underlying test cases can be evaluated as well. This test monitor (4) may be applied during simulation as well as in the vehicle itself.

The automated supervised testing system (1-4) effectively integrates any test object (2) into an IT system frame (1). The IT system frame (1) controls the actual test procedures. To this end, the test cases are loaded into the test object (2) and started. Subsequently, the test results are stored and compared with a test comparison (3) file, highlighting any deviations. A complete assessment depends on the generated test comparison (3) files and their coverage.

The test monitor (4) operates concurrently to the IT system frame (1). This monitor (4) serves to log all signals and data on multiple levels and to analyze any underlying patterns. Such findings are evaluated both rule-based on the signal level and data-based on their algorithmic and data level. Any recognized patterns are evaluated and provided within the IT system frame (1). Concurrent analytics are employed to complete those tests that have not been included in the test comparison (3) file.

This way, the test monitor (4) effectively completes the evaluation by contemplating test results on different levels. Due to its integration into the IT system frame (1), the test monitor (4) may execute completely in parallel, significantly saving runtime compared to a sequential workflow. Since its results are stored in the IT system frame (1), the test monitor (4) ultimately allows to leverage the generated data for holistic analysis and training of neural networks. Similarly, a crawler can search all documents for specific results, patterns, and configurations.

To its data-based extent, the test monitor (4) is based on a smart analytics core. Depending on type and subject of the training, this core is prepared for specific tasks and forms of pattern search. Thus, for example, real situations may be distinguished from borderline simulated situations, images can be compared, "good" (well-performing) functions may be discerned from "bad" functions, and correlations can be recognized. These additional views offered by the smart analytics core greatly expand the test spectrum achievable and thus provide for significantly improved system security. Hence, said smart analytics form an essential contribution to future secure robotic applications such as fully automated driving.

### Industrial applicability

The invention is applicable, among others, throughout the automotive and robotics industries.

### Reference signs list

| | |
|---|---|
| 1 | IT system frame |
| 2 | Test object |
| 3 | Test comparison |
| 4 | Test monitor |
| 5 | Test instructions |

### Citation list

The following documents are cited hereinbefore.

### Patent literature

US 7844396 B (DEERE AND CO) 15.03.2007

### Non-patent literature

MAKRIDIS, Michail, et al. Assessing the Impact of Connected and Automated Vehicles. A Freeway Scenario. Advanced Microsystems for Automotive Applications 2017. Lecture Notes in Mobility. 2018, p.213-225.

## Claims

1. Automated testing system (1-4)
comprising
an IT system frame (1) for automating, upon given instructions (5), a test comprising multiple test cases and
a test object (2) for establishing test results of the test cases, the test results being subject to a test comparison (3),
**characterized in**
a test monitor (4) for supervising at least the test results.

2. System as per Claim 1
wherein
the test object (2) exhibits a system configuration associated with the test cases.

3. System as per Claim 1 or Claim 2
wherein
the IT system frame (1) is adapted to document the test results.

4. System as per any of the preceding claims
wherein
the test object (2) comprises a simulation, vehicle, or test bench.

5. System as per any of the preceding claims
wherein
the test comparison (3) is based upon predefined rules related to the test cases.

6. System as per any of the preceding claims
wherein
the test monitor (4) is rule-based and data-based.

7. System as per any of the preceding claims
wherein
the test monitor (4) is adapted to detect patterns simultaneously on different levels of the system, to determine correlations, and to evaluate the test.

8. System as per Claim 7
wherein
the test monitor (4) is further adapted to evaluate the test cases.

9. System as per any of the preceding claims
wherein
the test comparison (3) is drawn with a reference file.

10. System as per any of the preceding claims,
further comprising
a crawler for finding results, patterns, and configurations.

11. System as per any of the preceding claims
wherein
the crawler is adapted to evaluate and store the patterns within the
IT system frame (1).

12. System as per any of the preceding claims
wherein
the test monitor (4) comprises a smart analytics core.

13. System as per Claim 12
wherein
the test monitor (4) is adapted to train the core for pattern recognition.

14. System as per any of the preceding claims
wherein
the core comprises neural networks.

15. Use of an automated testing system (1-4)
comprising
automating, upon given instructions (5), a test comprising multiple test cases and
establishing test results of the test cases, the test results being subject to a test comparison (3),
**characterized in**
supervising at least the test results.
